(19) Europäisches Patentamt / European Patent Office / Office européen des brevets

(11) **EP 3 037 718 B1**

(12) **EUROPEAN PATENT SPECIFICATION**

(45) Date of publication and mention
of the grant of the patent:
**16.09.2020 Bulletin 2020/38**

(21) Application number: **14833979.9**

(22) Date of filing: **11.08.2014**

(51) Int Cl.:
*F21V 5/00* (2018.01)    *F21S 2/00* (2016.01)
*G02B 13/00* (2006.01)    *G02B 17/08* (2006.01)
*F21Y 101/00* (2016.01)

(86) International application number:
**PCT/JP2014/071233**

(87) International publication number:
**WO 2015/020229 (12.02.2015 Gazette 2015/06)**

(54) **ILLUMINATION DEVICE, AND WIDE LIGHT DISTRIBUTION LENS**

BELEUCHTUNGSVORRICHTUNG UND LINSE MIT BREITER LICHTVERTEILUNG

DISPOSITIF D'ÉCLAIRAGE ET LENTILLE DE RÉPARTITION DE LUMIÈRE LARGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2013 JP 2013166928
27.05.2014 PCT/JP2014/063913**

(43) Date of publication of application:
**29.06.2016 Bulletin 2016/26**

(73) Proprietors:
• **Kabushiki Kaisha Toshiba
Minato-ku
Tokyo 105-8001 (JP)**
• **Toshiba Materials Co., Ltd.
Yokohama-shi, Kanagawa 235-8522 (JP)**

(72) Inventors:
• **OHNO Hiroshi
Tokyo 105-8001 (JP)**
• **KATO Mitsuaki
Tokyo 105-8001 (JP)**
• **HISANO Katsumi
Tokyo 105-8001 (JP)**

• **KONDO Hiroyasu
Yokohama-shi
Kanagawa 235-8522 (JP)**
• **TSUDA Ryoji
Yokohama-shi
Kanagawa 235-8522 (JP)**
• **OOYA Yasumasa
Yokohama-shi
Kanagawa 235-8522 (JP)**
• **HAYASHIHARA Hiromichi
Tokyo 105-8001 (JP)**

(74) Representative: **Hoffmann Eitle
Patent- und Rechtsanwälte PartmbB
Arabellastraße 30
81925 München (DE)**

(56) References cited:
**EP-A1- 2 367 045        JP-A- 2003 090 920
JP-A- 2011 228 204      JP-A- 2012 160 666
JP-A- 2013 084 346      US-A1- 2009 310 368
US-A1- 2011 157 898     US-A1- 2012 026 748
US-A1- 2012 320 580**

**Description**

<u>FIELD</u>

Embodiments of the present invention relate to lighting devices and wide light distribution lenses.

<u>BACKGROUND</u>

In an LED (Light-Emitting Diode) lamp for general lighting, light directivity is high, and the light distribution angle is as narrow as approximately 120 degrees. Therefore, the spread of light at a time when such an LED lamp is attached to a lighting fixture and is switched on differs from that with an incandescent light bulb.

To solve this problem, a wide light distribution lens is provided on a light-emitting module (hereinafter also referred to as a light-emitting element) of a COB (Chip On Board) type In a conventional LED lamp (JP4660654B). A conventional wide light distribution lens includes an incidence surface, a first exit surface located on the opposite side from the incidence surface, and a second exit surface connecting the outer circumference of the incidence surface and the outer circumference of the first exit surface.

The first exit surface has a shape that is concave like a circular cone with respect to the central portion of the incidence surface, and the tip of the circular cone is located on the optical axis that runs through the center of the incidence surface. The second exit surface concentrically surrounds the optical axis, and extends in the radial direction of the optical axis, from the outer circumference of the incidence surface toward the outer circumference of the first exit surface.

When light from the light-emitting element enters the incidence surface of the wide light distribution lens, some of the incident light is totally reflected by the first exit surface and then travels toward the second exit surface. The light is further released from the second exit surface to the sides and the back of the wide light distribution lens. Accordingly, the light exiting from the second exit surface is the light distribution component traveling to the back of the LED lamp, and the light distribution angle of the LED lamp becomes wider.

In the conventional wide light distribution lens, the second exit surface that diffuses light to the sides and the back of the LED lamp extends in a radial direction of the central axis, from the outer circumference of the incidence surface toward the outer circumference of the first exit surface.

In such a structure, increase in the size of the wide light distribution lens cannot be prevented. Therefore, where such a wide light distribution lens is used in a small-sized LED lamp having a globe shaped like a chandelier bulb, the wide light distribution lens cannot be housed in the globe.

Further lenses are derivable from US 2012/320580 A1, US 2011/157898 A1, EP 2 367 045 A1, US 2012/026 748 A1, JP 2003090920 A and US 2009/310368 A1.

<u>SUMMARY OF INVENTION</u>

Technical Problem

This embodiment provides a wide light distribution lens and a lighting device that can be made smaller in size while maintaining a sufficient light distribution angle.

Solution to Problem

A wide light distribution lens according to the invention includes the features of claim 1 and in particular: a first optical element having a shape rotationally symmetric about a central axis, the first optical element being transparent to visible light, the first optical element including a first portion and a second portion connected to the first portion, the first portion including a bottom surface having a shape of one of a concave surface or a flat surface, and a side surface connected to the bottom surface, the second portion including an upper surface and a side surface connected to the upper surface, the side surface of the first portion and the side surface of the

second portion having joining portions, the joining portions having a shape becoming wider in a direction from the bottom surface toward the joining portions, wherein a member including a first region having a center in which the central axis passes through and a second region located outside the first region, is disposed to face the bottom surface of the first portion, in a cross-section of the first optical element taken along a plane including the central axis, the side surface of the first portion is designed so that an angle $\theta_P$ between an outward normal vector of the first portion at a first point on the side surface and a first vector from the first point toward a second point is larger than a total reflection angle $\theta_C$ in the first portion in the cross section, the second point being a point located on the first point side of the central axis and being a point in the first region among points existing on the member, and in the cross-section, the side surface of the second portion is designed so that an angle $\theta_Q$ between an inward normal vector of the second portion at a third point on the side surface and a vector from the third point toward a fourth point is larger than the total reflection angle $\theta_C$ in the second portion, the fourth point being a point located on the third point side of the central axis and being a point in the second region among the points existing on the member.

DESCRIPTION OF DRAWINGS

Fig. 1 is a bird's eye view showing a wide light distribution lens according to a first embodiment.
Fig. 2 is a cross-sectional view showing a lighting device according to the first embodiment.
Fig. 3 is a cross-sectional diagram for explaining the functions of the lighting device of the first embodiment.
Fig. 4 is a cross-sectional diagram for explaining the functions of the lighting device of the first embodiment.
Fig. 5 is a cross-sectional diagram for explaining the functions of the lighting device of the first embodiment.
Fig. 6 is a diagram showing the light distribution of the lighting device of the first embodiment.
Fig. 7 is a bird's eye view showing a lighting device according to a second embodiment.
Fig. 8 is a bird's eye view showing a wide light distribution lens according to the second embodiment.
Fig. 9 is a cross-sectional view showing the lighting device according to the second embodiment.
Fig. 10 is a cross-sectional diagram for explaining the functions of the lighting device of the second embodiment.
Fig. 11 is a cross-sectional diagram for explaining the functions of the lighting device of the second embodiment.
Fig. 12 is a cross-sectional diagram for explaining the functions of the lighting device of the second embodiment.
Fig. 13 is a cross-sectional diagram for explaining the functions of the lighting device of the second embodiment.
Fig. 14 is a bird's eye view showing a lighting device according to a third embodiment.
Fig. 15 is a bird's eye view showing a wide light distribution lens according to the third embodiment.
Fig. 16 is a cross-sectional view showing the lighting device according to the third embodiment.
Fig. 17 is a cross-sectional diagram for explaining the functions of the lighting device of the third embodiment.
Fig. 18 is a cross-sectional diagram for explaining the functions of the lighting device of the third embodiment.
Fig. 19 is a cross-sectional view of a lighting device according to a fourth embodiment.
Fig. 20 is a cross-sectional view of a lighting device according to a first modification of the fourth embodiment.
Fig. 21 is a cross-sectional view of a lighting device according to a second modification of the fourth embodiment.

DETAILED DESCRIPTION

The following is a description of embodiments, with reference to the drawings.

(First Embodiment)

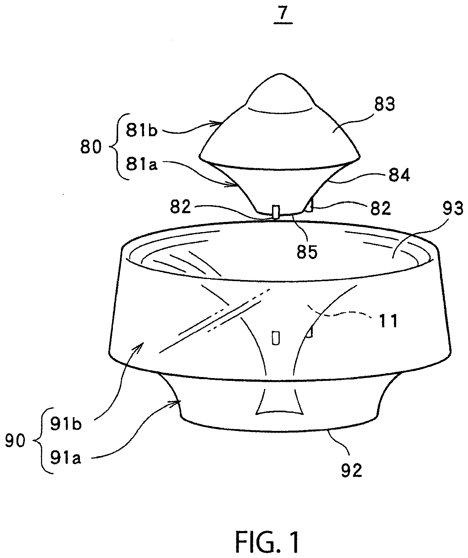

A lighting device according to a first embodiment includes a light-emitting module (a light-emitting element) and a wide light distribution lens. A bird's eye view of this wide light distribution lens is shown in Fig. 1. This wide light distribution lens 7 includes an optical element 80, joining poles 82, and a basic optical element 90.
The basic optical element 90 includes a first portion 91a and a second portion 91b connected to this first portion. The bottom surface of the first portion 91a is flat, and serves as the incidence surface on which light from the light-emitting element is incident. The side surface of the first portion 91a is in contact with the side surface of the second portion 91b at the joining surfaces having the same size and the same shape. The joining surfaces are larger than the above incidence surface. Here, a joining surface means a cross-sectional surface taken along a plane perpendicular to the central axis. The side surface of the first portion 91a has a shape concave to the central axis of the first portion 91a. That is, the cross-sectional area of the first portion 91a becomes larger in the direction from its bottom surface toward the joining surface or in the direction from the bottom toward the top, and the side surface of the first portion 91a has a shape concave to the central axis of the first portion 91a. Here, the direction toward the "top" and the direction toward the "bottom" correspond to the positive direction and the negative direction of the central axis 5, respectively. The positive direction is the direction in which light is extracted from the light-emitting module. A cross-sectional area means the area of a cross-sectional surface taken along a plane perpendicular to the central axis. The upper surface (total reflection surface) 93 of the second portion 91b has a shape concave to the central axis, and the side surface of the second portion 91b has such a tapered shape that the cross-sectional area of the second portion 91b becomes smaller in the direction from the bottom toward the top. At the central portion of the basic optical element 90, a through hole 11 is provided along the central axis. This through hole 11 has such a shape that the cross-sectional area becomes smaller in the direction from the incidence surface 92 toward the top in the first portion 91a, and has such a shape that the cross-sectional area becomes larger in the direction from the bottom toward the top in the second portion 91b. Light that enters the through hole 11 from the light-emitting element not shown in the drawing travels straight, and light that enters the first portion 91a without passing through the through hole 11 is totally reflected by the upper surface (total reflection surface) 93.

The optical element 80 includes a first portion 81a and a second portion 81b connected to this first portion 81a. The bottom surface 85 of the first portion 81a is a concave surface, and the side surface 84 is a connection surface connected to the total reflection surface 93 of the basic optical element 90. The side surface 84 of the first portion 81a is connected to the side surface 83 of the second portion 81b at the joining surfaces having the same size and the same shape. The joining surfaces are larger than the bottom surface. The side surface 83 of the second portion 81b is a total-reflection/refractive-transmission surface that totally reflects or refractively transmits light that has passed through the optical element 80. The upper surface (the surface in the positive direction side of the central axis) of the second portion 81b is connected to the side surface 83, and has a shape convex to the central portion. The joining poles 82 are provided on the side surface of the first portion 81a. With the joining poles 82, the optical element 80 and the basic optical element 90 are joined to each other. At this point, the surfaces at which the joining poles 82 are in contact with the basic optical element 90 may be bonded to each other with an adhesive agent or the like. The length of the joining poles 82 is determined so that an airspace is formed between the optical element 80 and the basic optical element 90.

In the wide light distribution lens 7 of this embodiment, both the basic optical element 90 and the optical element 80 are made of acrylic. However, the material is not necessarily acrylic, and any material transparent to visible light can be used. For example, the basic optical element 90 may be made of glass, and the optical element 80 may be made of polycarbonate. Where materials are selected in this manner, a higher heat resistance than that in a case where acrylic is used can be achieved. Hereinafter, the refractive index of acrylic will be represented by n. The value of this refractive index n is approximately 1.49. The total reflection angle $\theta_C$ with respect to this is expressed as follows:

$$\theta_C = \tan^{-1}\left(\frac{1}{n}\right) \cong 42.2° \qquad (1)$$

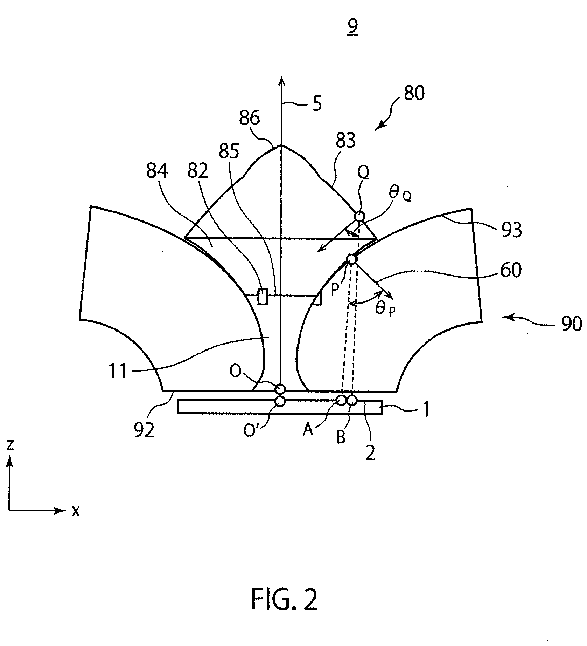

Referring now to Fig. 2, the cross-sectional shapes of the basic optical element 90 and the optical element 80 are described.

First, the light-emitting element 1 used in the lighting device 9 of this embodiment, and the coordinate system based thereon are described. The light-emitting surface 2 of the light-emitting element 1 is positioned to face the incidence surface 92 of the basic optical element 90. Here, the center O' of the light-emitting surface 2 is the gravity center of the light-emitting surface 2. The central axis 5 of the wide light distribution lens runs through the center O', and is perpendicular to the light-emitting surface 2. The origin O of the central axis 5 is the point at which the central axis 5 and the incidence surface 92 intersect each other.

The light-emitting element 1 is a surface light source, and the light-emitting surface 2 of the light-emitting element 1 has a circular shape of 14 mm in diameter, for example. However, the size and the shape of the light-emitting surface 2 are not limited to them. Where C represents the area of the light-emitting surface 2, the radius $r_A$ of a virtual circle having an area equal to half the area of the light-emitting surface 2 is expressed as follows:

$$r_A = \sqrt{\frac{C}{2\pi}} \qquad (2)$$

Where the diameter of the light-emitting surface is 14 mm, $r_A$ is approximately 4.9 mm. On the light-emitting surface 2, a point A is a point at which the distance from the central axis 5 is $r_A$. However, the point A is not limited to this, and may be any point at which the distance from the central axis 5 is equal to or shorter than $r_A$.

(Cross-Sectional Shape of the Basic Optical Element 90)

Next, the cross-sectional shape of the basic optical element 90 is described. In the basic optical element 90, the through hole 11 is provided along the central axis 5.

The direction in which light is extracted from the origin O along the central axis 5 is the z-direction, a direction that is perpendicular to the z-direction is the x-direction, and the distance from the central axis 5 at the point where the distance to the central axis 5 on the incidence surface 92 is the shortest is represented by I. Here, the shape of the total reflection surface 93 can be expressed as follows:

$$x = r_A - (r_A - l)\exp(\tan\theta_a\Theta)\cos\Theta \qquad (3)$$

$$z = (r_A - l)\exp(\tan\theta_a\Theta)\sin\Theta \qquad (4)$$

In the equation (3) and the equation (4), the parameter $\Theta$ represents the finite region included in the range expressed as follows:

$$0 \leq \Theta < \pi \qquad (5)$$

In the equation (3) and the equation (4), the real constant $\theta_a$ is a constant within the range expressed as follows:

$$\theta_C \leq \theta_a < \pi/2 \qquad (6)$$

When

$$\theta_a = \theta_C \qquad (7),$$

the total reflection surface 93 can be minimized.

Where each point P in the finite region of the total reflection surface 93 is an inward normal vector of the total reflection surface 93 at the point P, or a vector toward the inside of the material is an inward normal vector, the angle $\theta_P$ with respect to a vector PA connecting the point P and the point A satisfies the following condition:

$$\theta_P > \theta_C \qquad (8)$$

In the equation (3) and the equation (4), the real constant I satisfies the following condition:

$$I < r_A \qquad (9)$$

Also, the coordinates of the point at which the total reflection surface 93 becomes closest to the central axis 5 are expressed as follows:

$$x = r_A - (r_A - l)\exp(\theta_a\tan\theta_a)\cos\theta_a \qquad (10)$$

$$z = (r_A - l)\exp(\theta_a\tan\theta_a)\sin\theta_a \qquad (11)$$

In this case, the normal vector at this point is perpendicular to the central axis 5.

(Cross-Sectional Shape of the Optical Element 80)

Next, the cross-sectional shape of the optical element 80 is described. In the optical element 80, the connection surface 84 is provided along the total reflection surface 93. The connection surface 84 is joined to the total-reflection/refractive-transmission surface 83. The connection surface 84 is also joined to the bottom surface 85. This connection surface 84 has a shape that conforms to the total reflection surface 93 of the basic optical element 90, and accordingly, satisfies the equation (8) like the total reflection surface 93 does. The bottom surface 85 is a concave surface.

These surfaces are rotationally symmetric about the central axis 5. Here, rotational symmetry means that, when an object is rotated 360 degrees about the central axis 5, the shape of the object remains the same throughout the 360-degree rotation. For example, a circular cylinder and a quadratic prism are rotationally-symmetrical structures.

Three connecting poles 82 are provided on the connection surface 84. The connecting poles 82 are inserted into three holes (not shown) formed in the total reflection surface 93 of the basic optical element 90. The joining surfaces of the connecting poles 82 may be bonded to the holes with an adhesive agent. The length of the connecting poles 82 is determined so that the surface distance between the connection surface 84 and the total reflection surface 93 becomes 0.1 mm. However, the surface distance is not limited to this, as long as being not shorter than the wavelength of visible light.

The maximum value of the distance between the connection surface 84 and the central axis 5 is equal to the distance between an edge point of the light-emitting element 1 and the central axis 5. Here, the maximum value is 7 mm. However, the maximum value is not limited to this.

The total-reflection/refractive-transmission surface 83 has an apex 86 that is convex to the top on the central axis 5. A point Q is set on the total-reflection/refractive-transmission surface 83, and a point B is a point located on the point-Q side of the central axis 5 and is the point on the light-emitting surface 2 where the distance from the central axis 5 is longer than $r_A$. Here, the distance from the central axis 5 to the point B is approximately 5.0 mm. Where $\theta_Q$ represents the angle between the inward normal vector at the point Q and the vector QB connecting the point Q and the point B, $\theta_Q$ satisfies the following condition:

$$\theta_Q > \theta_C \qquad (12)$$

Here, $\theta_Q$ is approximately 53 degrees.

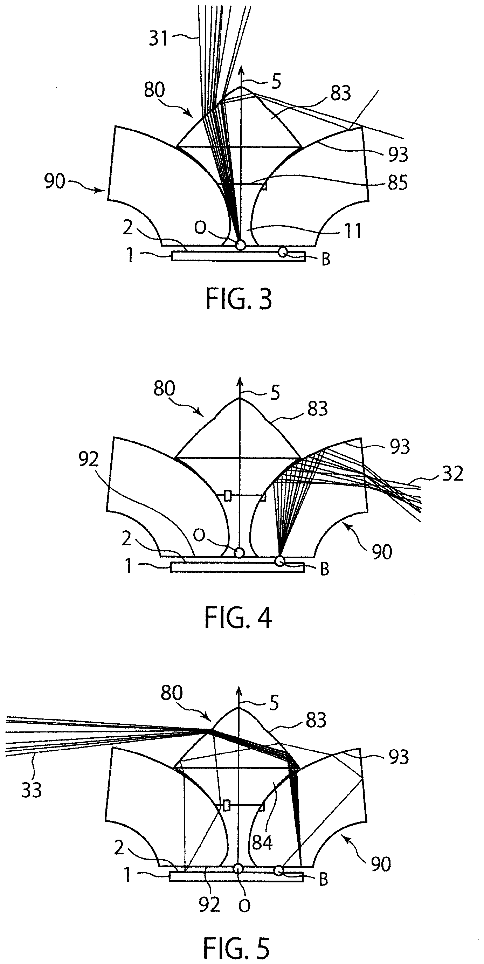

Referring now to Figs. 3 through 5, the functions of the wide light distribution lens 7 of this embodiment are described. Figs. 3 through 5 are cross-sectional views including the central axis 5. In these drawings, light beams emitted from the light-emitting surface 2 of the light-emitting element 1 are additionally shown.

Referring first to Fig. 3, explanation is made. Light beams 31 that are emitted from the light-emitting surface 2 and pass along the central axis 5 through the through hole 11 enter the bottom surface 85. The light beams 31 are then spread by refraction. Further, the light beams 31 are refractively transmitted by the total-reflection/refractive-transmission surface 83, and are released in the positive direction of the central axis 5. In this manner, light beams on the front side (the positive direction of the central axis 5) are produced.

Referring next to Fig. 4, explanation is made. Light beams 32 that are emitted from the point A or a region on the light-emitting surface 2 closer to the central axis 5 than the point A is and enter the incidence surface 92 are totally reflected by the total reflection surface 93. The light beams 32 are eventually released from the exit surface of the basic optical element in the negative direction of the central axis 5. In this manner, light beams 32 on the back side (the negative direction of the central axis 5) are produced.

The distance from the central axis 5 to the point A is equal to the distance expressed by the equation (2). That is, the point A is located on the outer edge of the virtual circle having an area equal to half the area of the light-emitting surface 2. Accordingly, almost half the light beams emitted from the light-emitting surface 2 are eventually released to the back side as described above.

Referring lastly to Fig. 5, explanation is made. Light beams 33 that are emitted from a region on the light-emitting surface 2 located farther away from the central axis 5 than the point B is and enter the incidence surface 92 pass through the total reflection surface 93. Immediately after passing through the total reflection surface 93, the light beams 33 enter the connection surface 84 and propagate in the optical element 80. The light beams 33 are then temporarily totally-reflected by the total-reflection/refractive-transmission surface 83. The light beams 33 are further refractively transmitted by the same total-reflection/refractive-transmission surface 83. That is, the total-reflection/refractive-transmission surface 83 also serves as a refractive transmission surface. In this manner, the light beams 33 is released from the optical element 80 to the intermediate side (between the front side and the back side).

As described above, light beams that are emitted from three regions on the light-emitting surface 2 of the light-emitting element 1 are eventually released to the front side, the back side, and the intermediate side. In this manner, light beams are released in all directions, and a wide light distribution is realized.

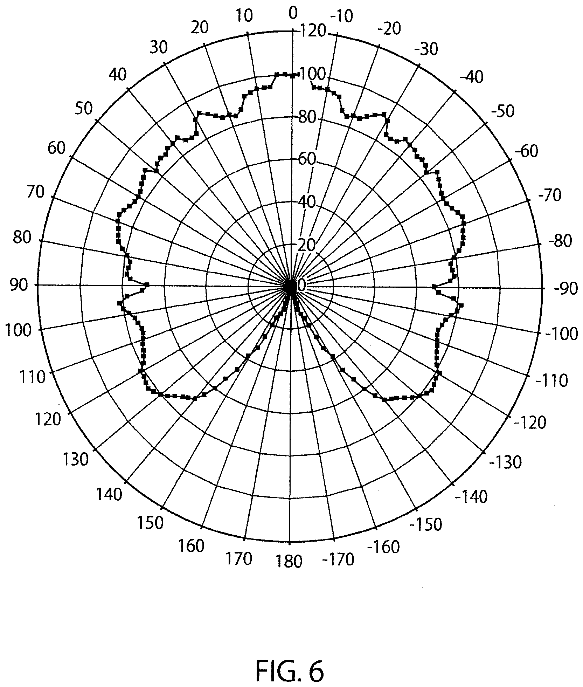

The results of an actual calculation of a light distribution through a simulation are shown in Fig. 6. Fig. 6 is a radar chart of light intensities (standardized) with respect to light distribution angles. As can be seen from Fig. 6, 1/2 of the light distribution angle is approximately 300 degrees.

This embodiment is not limited to the structure described above. Also, the terms "parallel" and "perpendicular" should be interpreted as inclusive of angle errors of 0 to two degrees, with the precision of the product being taken into account.

The distance from the central axis 5 to the edge point of the total-reflection/refractive-transmission surface 83 closer to the light-emitting surface 2 is shorter than the distance from the central axis 5 to the edge point of the exit surface 93 of the basic optical element 90 farthest from the light-emitting surface 2. With this, the height of the entire lighting device 9 can be reduced, and the lighting device 9 can be made smaller in size.

As described above, according to the first embodiment, it is possible to provide a wide light distribution lens and a lighting device that can be made smaller in size while maintaining a sufficient light distribution angle.

(Second Embodiment)

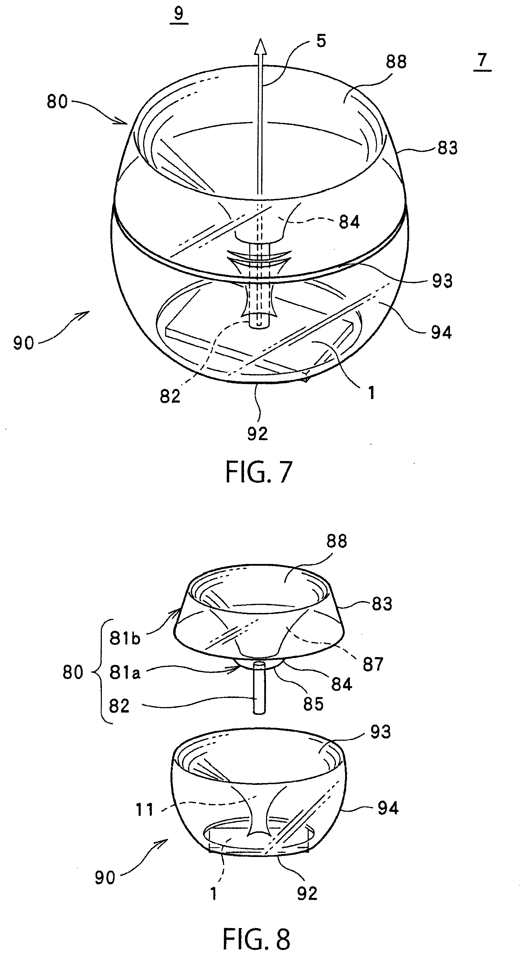

Fig. 7 shows a lighting device according to a second embodiment. This lighting device 9 of the second embodiment includes a light-emitting element 1 and a wide light distribution lens 7. This wide light distribution lens 7 includes an optical element 80 and a basic optical element 90. Fig. 8 is a bird's eye view of the optical element 80 and the basic optical element 90 of the wide light distribution lens 7 separated from each other. The wide light distribution lens 7 has a shape that is rotationally symmetric about the central axis 5 shown in Fig. 7.

The basic optical element 90 includes a round-shaped flat bottom surface 92, an upper surface 93 having a shape that is concave to the center, and a side surface 94. The upper surface (total reflection surface) 93 of the basic optical element 90 is a concave surface. The bottom surface 92 serves as the incidence surface on which light from the light-emitting element 1 is incident. The side surface 94 serves as the exit surface. The side surface 94 has a shape convex to the central axis 5, and also has such a shape that the cross-sectional area becomes larger in the direction from the bottom surface 92 toward the upper surface 93. Also, at the central portion of the basic optical element 90, a through hole 11 is provided along the central axis. This through hole 11 has such a shape that the cross-sectional area temporarily decreases in the direction from the incidence surface 92 toward the upper surface, and thereafter, the cross-sectional area increases.

The optical element 80 includes a first portion 81a, a second portion 81b connected to this first portion 81a, and a joining pole 82 connected to the central portion of the bottom surface 85 of the first portion 81a. With the joining pole 82, the optical element 80 and the basic optical element 90 are joined to each other. In this embodiment, the end of the joining pole 82 serves as a male screw, and the through hole 11 of the basic optical element 90 serves as a female screw. With this, the optical element 80 and the basic optical element 90 can be readily joined to each other, without any use of an adhesive agent. The length of the joining pole 82 is determined so that an airspace is formed between the optical element 80 and the basic optical element 90. In this manner, the optical element 80 and the basic optical element 90 can be detachably joined to each other by the joining pole 82. The joining pole 82 and the through hole 11 may not be formed as screws, and may be bonded and secured to each other with an adhesive agent.

The bottom surface 85 of the first portion 81a of the optical element 80 is flat, and the side surface 84 is a connection surface connected to the total reflection surface 93 of the basic optical element 90. The side surface 84 of the first portion 81a is connected to the side surface 83 of the second portion 81b at the joining surfaces having the same size and the same shape. The joining surfaces are larger than the bottom surface 85. The side surface 83 of the second portion 81b is a total-reflection/refractive-transmission surface that totally reflects or refractively transmits light that has passed through the optical element 80. The upper surface 88 of the second portion 81b has a shape that is concave to the center. That is, the upper surface 88 of the second portion 81b is a concave surface. This upper surface 88 is also referred to as the inner surface. Also, at the central portion of the optical element 80, a hole 87 is formed along the central axis 5. This hole 87 has such a shape that the cross-sectional area decreases in the direction from the upper surface 88 toward the bottom, but the hole 87 does not reach the bottom surface 85.

In this embodiment, the light-emitting element 1 is a surface light source, and the light-emitting surface 2 of the light-emitting element 1 has a rectangular shape of 10 mm $\times$ 16 mm in size. However, the size and the shape of the light-emitting surface 2 are not limited to them. Where C represents the area of the light-emitting surface 2, the radius $r_A$ of a virtual circle having an area equal to half the area of the light-emitting surface 2 is expressed as follows:

$$r_A = \sqrt{\frac{C}{2\pi}}$$

Where the size of the light-emitting surface 2 is 10 mm $\times$ 16 mm, $r_A$ is approximately 5.0 mm. On the light-emitting surface 2, a point A is a point at which the distance from the central axis 5 is $r_A$.

(Cross-Sectional Shapes of the Basic Optical Element 90 and the Optical Element 80)

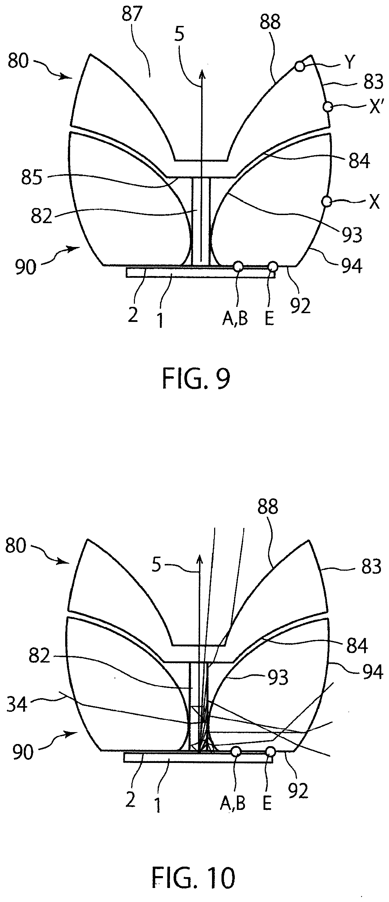

Referring now to Fig. 9, the cross-sectional shapes of the basic optical element 90 and the optical element 80 are described.

First, the basic optical element 90 is described. On the light-emitting surface 2, points at which the distance from the central axis 5 is $r_A$ are set as points A and B. Here, the point A and the point B are the same point. In a cross-sectional view taken along a plane including the central axis 5, the angle between the inward normal vector at a point X on the exit surface 94 and the vector XB connecting the point X and the point B is represented by $\theta_X$. Here, $\theta_X$ satisfies the following condition:

$$\theta_X > \theta_C$$

(Cross-Sectional Shape of the Optical Element)

The optical element 80 is now described. In the optical element 80, the connection surface 84 is provided along the total reflection surface 93. The connection surface 84 is joined to the total-reflection/refractive-transmission surface 83. The connection surface 84 is also joined to the bottom surface 85. This connection surface 84 has a shape that conforms to the total reflection surface 93 of the basic optical element 90, and accordingly, satisfies the equation (8) like the total reflection surface 93 does. The bottom surface 85 is flat, and the connecting pole 82 is connected to the central portion of the bottom surface 85. The distance from the central axis 5 to the edge point of the total-reflection/refractive-transmission surface 83 closer to the light-emitting surface 2 of the light-emitting element 1 is equal to the distance from the central axis 5 to the edge point of the exit surface 94 of the basic optical element 90 farthest from the light-emitting surface 2.

In a cross-sectional view taken along a plane including the central axis 5, the angle between the inward normal vector at a point X' on the total-reflection/refractive-transmission surface 83 and the vector X'B connecting the point X' and the point B is represented by $\theta_{X'}$. Here, $\theta_{X'}$ satisfies the following condition:

$$\theta_{X'} > \theta_C$$

As described above, the hole 87 is formed in the optical element 80. In a cross-sectional view taken along a plane including the central axis 5, a point on the inner surface 88 of the hole 87 is a point Y. Of the edge points on the light-emitting surface 2 of the light-emitting element 1, the point on the point Y side of the central axis 5 is a point E. Where $\theta_Y$ represents the angle between the inward normal vector at the point Y and the vector YE connecting the point Y and the point E, $\theta_Y$ satisfies the following condition:

$$\theta_Y > \theta_C$$

Referring now to Figs. 10 through 13, the functions of the lighting device 9 of the second embodiment are described. Figs. 10 through 13 are cross-sectional views including the central axis 5. In these drawings, light beams emitted from the light-emitting surface 2 of the light-emitting element 1 are additionally shown.

Referring first to Fig. 10, explanation is made. Light beams 34 that are emitted from a portion in the vicinity of the center on the light-emitting surface 2 of the light-emitting element 1 enter the connecting pole 82, and are substantially diffused and transmitted by the screw portion formed in the connecting pole 82. The light beams 34 are eventually released in all directions. That is, the light beams 34 emitted from a portion in the vicinity of the center of the light-emitting surface 2 are not released forward, unlike light beams in the first embodiment. Therefore, the components to be eventually released forward need to be generated from some other portion.

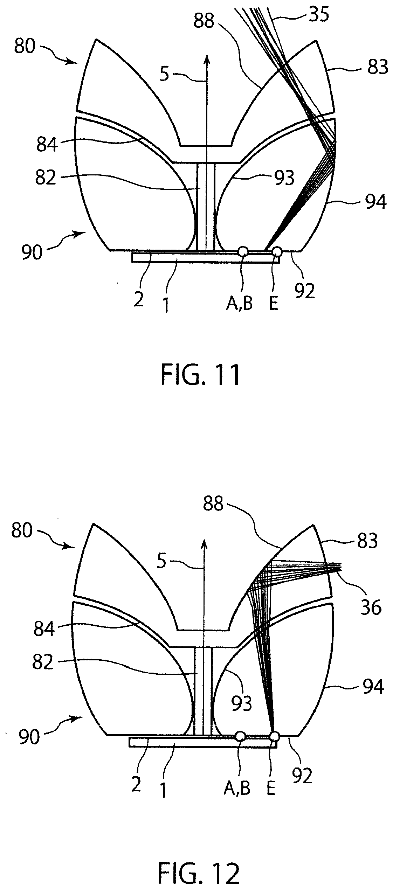

Referring next to Fig. 11, explanation is made. Light beams 35 that are emitted from a region between the point B and the point E on the light-emitting surface 2 of the light-emitting element 1 and enter the incidence surface 92 are totally reflected by the exit surface 94. The light beams 35 further pass through the total reflection surface 93, enter the connection surface 84, are refractively transmitted from the inner surface 88 of the hole 87, and are released to the front side.

Referring next to Fig. 12, explanation is made. Light beams 36 that are emitted from the point E on the light-emitting surface 2 and enter the incidence surface 92 pass through the total reflection surface 93, and then enter the connection surface 84. After that, the light beams 36 are totally reflected by the inner surface 88 of the hole 87. Further, the light beams 36 are refractively transmitted by the total-reflection/refractive-transmission surface 83, and are released to the intermediate side of the central axis 5.

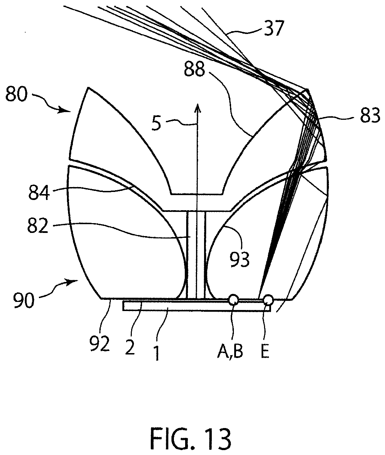

Referring lastly to Fig. 13, explanation is made. Light beams 37 that are emitted from a region between the point B and the point E on the light-emitting surface 2 and enter the incidence surface 92 pass through the total reflection surface 93, and then enter the connection surface 84. After that, the light beams 37 are totally reflected by the total-reflection/refractive-transmission surface 83. The light beams 37 are refractively transmitted by the inner surface 88 of the hole 87, and are released from the intermediate side to the front side.

Light release to the back side is the same as that in the case of the first embodiment shown in Fig. 4. That is, light that is emitted from the light-emitting surface 2 of the light-emitting element 1 enters the incidence surface 92, is totally reflected by the total reflection surface 93 of the basic optical element 90, and is then released to the back side.

As described above, light beams that are emitted from the light-emitting surface 2 of the light-emitting element 1 are eventually released to the front side, the intermediate side, and the back side.

In this manner, light beams are released in all directions, and a wide light distribution is realized. The total-reflection/refractive-transmission surface 83 and the exit surface 94 of the basic optical element 90 are smoothly joined to each other. With this, the surface from which light is eventually released becomes smooth, and the light distribution can also be made smooth.

As described above, according to the first embodiment, it is possible to provide a wide light distribution lens and a lighting device that can be made smaller in size while maintaining a sufficient light distribution angle.

(Third Embodiment)

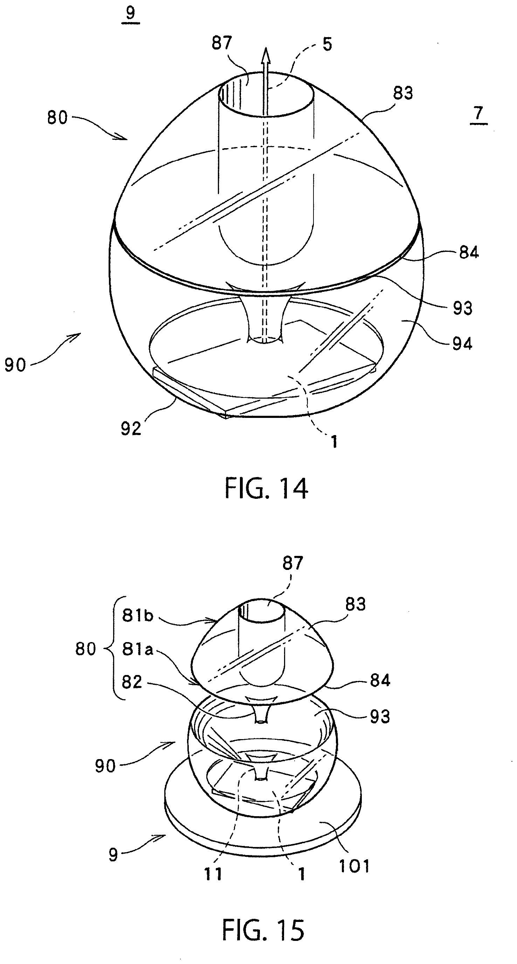

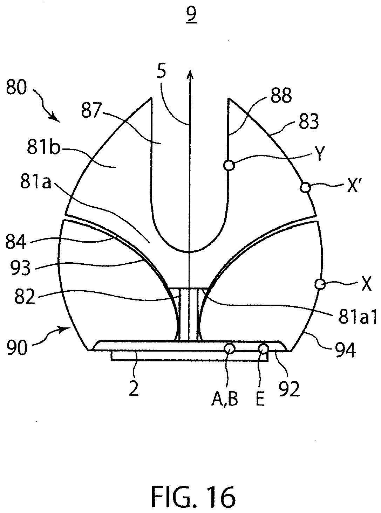

Referring now to Figs. 14 through 16, a lighting device according to a third embodiment is described. Fig. 14 is a bird's eye view of the lighting device according to the third embodiment. The lighting device 9 according to the third embodiment includes a light-emitting element 1 and a wide light distribution lens 7. This wide light distribution lens 7 includes an optical element 80 and a basic optical element 90. Fig. 15 is a bird's eye view of the optical element 80 and the basic optical element 90 of the wide light distribution lens 7 separated from each other. The wide light distribution lens 7 has a shape that is rotationally symmetric about the central axis 5 shown in Fig. 14. Fig. 16 is a cross-sectional view of the lighting device 9 of the third embodiment.

The basic optical element 90 includes a bottom surface 92 having a concave shape, an upper surface 93 having a shape that is concave to the center, and a side surface 94. The upper surface (total reflection surface) 93 of the basic optical element 90 is a concave surface. The bottom surface 92 serves as the incidence surface on which light from the light-emitting element 1 is incident. The side surface 94 serves as the exit surface. The side surface 94 has a shape convex to the central axis 5, and also has such a shape that the cross-sectional area becomes temporarily larger in the direction from the bottom surface 92 toward the upper surface 93, and thereafter, the cross-sectional area then decreases. Also, at the central portion of the basic optical element 90, a through hole 11 is provided along the central axis. This through hole 11 has such a shape that the cross-sectional area temporarily decreases in the direction from the incidence surface 92 toward the upper surface, and thereafter, the cross-sectional area increases.

The optical element 80 includes a first portion 81a, a second portion 81b connected to this first portion 81a, and a joining pole 82 connected to the central portion of the bottom surface 81a1 of the first portion 81a. With the joining pole 82, the optical element 80 and the basic optical element 90 are joined to each other. In this embodiment, the end of the joining pole 82 serves as a male screw, and the through hole 11 of the basic optical element 90 serves as a female screw. With this, the optical element 80 and the basic optical element 90 can be readily joined to each other, without any use of an adhesive agent. The length of the joining poles 82 is determined so that an airspace is formed between the optical element 80 and the basic optical element 90. In this manner, the optical element 80 and the basic optical element 90 can be detachably joined to each other by the joining pole 82. The joining pole 82 and the through hole 11 may not be formed as screws, and may be bonded and secured to each other with an adhesive agent.

The side surface 84 of the first portion 81a of the optical element 80 is a connection surface connected to the total reflection surface 93 of the basic optical element 90. The side surface 84 of the first portion 81a is connected to the side surface 83 of the second portion 81b at the joining surfaces having the same size and the same shape. The joining surfaces are larger than the bottom surface. The side surface 83 of the second portion 81b is a total-reflection/refractive-transmission surface that totally reflects or refractively transmits light emitted from the light-emitting surface 2. A hole 87 that extends along the central axis 5 to the joining surface of the second portion 81b is formed in the upper surface 88 of the second portion 81b. The side surface 88 of this hole 87 is also referred to as the inner surface. This hole 87 has a cross-sectional area that is substantially uniform in the direction from the top toward the bottom, and has a circular cylindrical shape. This hole 87 extends to the first portion 81a, and has such a shape that the cross-sectional area thereof in the first portion 81a becomes smaller in the direction toward the bottom.

The light-emitting element 1 is mounted on a substrate 101. The substrate 101 and the light-emitting element 1 are thermally bonded. In this embodiment, the light-emitting element 1 is a surface light source, and the light-emitting surface 2 of the light-emitting element 1 has a rectangular shape of 10 mm $\times$ 16 mm in size. However, the size and the shape of the light-emitting surface 2 are not limited to them. Where C represents the area of the light-emitting surface 2, the radius $r_A$ of a virtual circle having an area equal to half the area of the light-emitting surface 2 is expressed as follows:

$$r_A = \sqrt{\frac{C}{2\pi}}$$

Where the size of the light-emitting surface 2 is 10 mm $\times$ 16 mm, $r_A$ is approximately 5.0 mm. On the light-emitting surface 2, a point A is a point at which the distance from the central axis 5 is $r_A$. However, the point A is not limited to this, and may be any point at which the distance from the central axis 5 is equal to or shorter than $r_A$.

(Cross-Sectional Shapes of the Basic Optical Element 90 and the Optical Element 80)

Referring to Fig. 16, the cross-sectional shapes of the basic optical element 90 and the optical element 80 are described.

First, the basic optical element 90 is described. On the light-emitting surface 2, points at which the distance from the central axis 5 is $r_A$ are set as points A and B. Here, the point A and the point B are the same point.

In a cross-sectional view taken along a plane including the central axis 5, the angle between the inward normal vector at a point X on the exit surface 94 and the vector XB connecting the point X and the point B is represented by $\theta_X$. Here, $\theta_X$ satisfies the following condition:

$$\theta_X > \theta_C$$

Next, the optical element 80 is described. In the optical element 80, the connection surface 84 is provided along the total reflection surface 93. The connection surface 84 is joined to the total-reflection/refractive-transmission surface 83. The connection surface 84 is connected to the bottom surface 81a1, and the connecting pole 82 is connected to the central portion of the bottom surface 81a1. The connection surface 84 has a shape that conforms to the total reflection surface 93 of the basic optical element 90, and accordingly, satisfies the equation (8) like the total reflection surface 93 does. The bottom surface 81a1 is flat.

The distance from the central axis 5 to the edge point of the total-reflection/refractive-transmission surface 83 closer to the light-emitting surface 2 is equal to the distance from the central axis 5 to the edge point of the exit surface 94 of the basic optical element 90 farther from the light-emitting surface 2.

In a cross-sectional view taken along a plane including the central axis 5, the angle between the inward normal vector at a point X' on the total-reflection/refractive-transmission surface 83 and the vector X'B connecting the point X' and the point B is represented by $\theta_{X'}$. Here, $\theta_{X'}$ satisfies the following condition:

$$\theta_X > \theta_C$$

As described above, the hole 87 is formed in the optical element 80. In a cross-sectional view taken along a plane including the central axis 5, a point on the inner surface 88 of the hole 87 is a point Y. In this case, the inward normal vector at the point Y is perpendicular to the central axis 5. That is, the inner surface 88 has a finite region parallel to the central axis 5. A point on the inner surface 88 closer to the light-emitting surface 2 is at a shorter distance from the central axis 5.

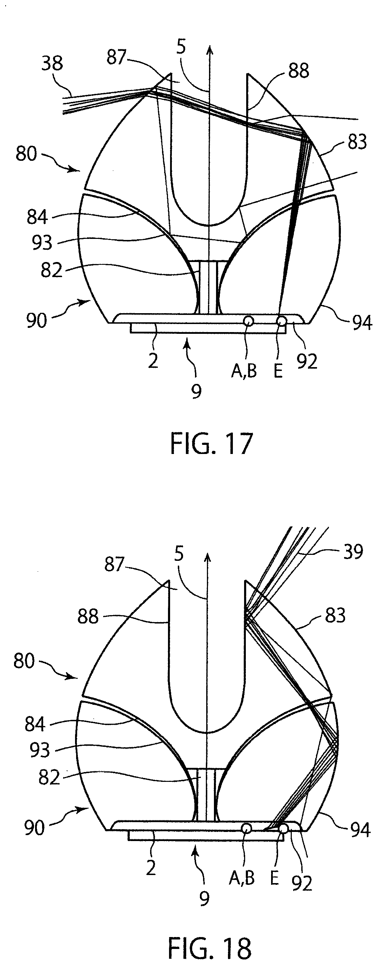

Referring now to Figs. 17 and 18, the functions of the lighting device 9 of this embodiment are described. Figs. 17 and 18 are cross-sectional views including the central axis 5. In these drawings, light beams emitted from the light-emitting surface 2 of the light-emitting element 1 are additionally shown.

Referring first to Fig. 17, explanation is made. Light beams 38 that are emitted from a region between the point B and the point E on the light-emitting surface 2 and enter the incidence surface 92 pass through the total reflection surface 93 of the basic optical element 90, enter the connection surface 84 of the optical element 80, and are totally reflected by the total-reflection/refractive-transmission surface 83. The light beams 38 further pass through the inner surface 88 of the hole 87, and are eventually released from the total-reflection/refractive-transmission surface 83 to the intermediate side.

Referring next to Fig. 18, explanation is made. Light beams 39 that are emitted from a region between the point B and the point E on the light-emitting surface 2 and enter the incidence surface 92 are totally reflected by the exit surface 94. The light beams 39 further pass through the total reflection surface 93 of the basic optical element 90, enter the connection surface 84 of the optical element 80, are totally reflected by the inner surface 88 of the hole 87, and are eventually released from the total-reflection/refractive-transmission surface 83 to the front side.

As the light beams are totally reflected by the hole 87 and are eventually released as described above, it seems to viewers that the hole 87 is emitting light. That is, as the inside of the optical element 80 appears to be emitting light, it is possible to achieve light emission similar to light emission from a point light source such as an incandescent light bulb. In other words, the feeling of a retrofit design increases.

Light beams being emitted from the light-emitting surface 2 of the light-emitting element 1 and being released to the back side is the same as that in the case of the first embodiment shown in Fig. 4. That is, light that is emitted from the light-emitting surface 2 of the light-emitting element 1 enters the incidence surface 92, is totally reflected by the total-reflection/refractive-transmission surface 93 of the basic optical element 90, and is then released to the back side.

As described above, light beams that are emitted from the light-emitting surface 2 of the light-emitting element 1 are eventually released to the front side, the intermediate side, and the back side. In this manner, light beams are released in all directions, and a wide light distribution can be realized.

Further, a concave portion is provided in the incidence surface 92. With this, Fresnel reflection from the incidence surface 92 can be reduced, and the light output ratio can be increased.

Also, having a finite region parallel to the central axis 5, the inner surface 88 glows along the central axis 5 like a filament. Accordingly, the feeling of a retrofit design similar to an incandescent light bulb increases. Furthermore, not having a reverse tapered shape, the inner surface 88 can be easily cut, and can be readily stamped with a metal mold at the time of manufacturing.

As described above, according to the third embodiment, it is possible to provide a wide light distribution lens and a lighting device that can be made smaller in size while maintaining a sufficient light distribution angle.


(Fourth Embodiment)

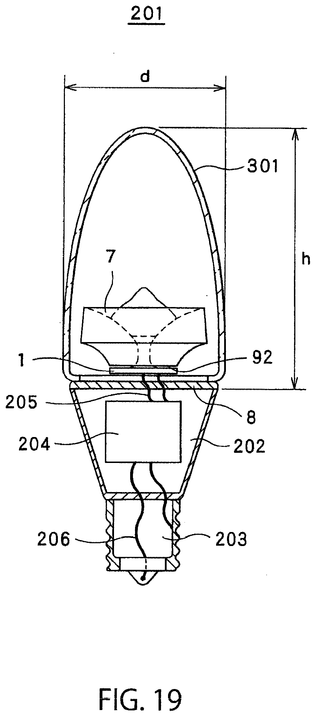

Referring now to Fig. 19, a lighting device according to a fourth embodiment is described. The lighting device 201 of the fourth embodiment includes a wide light distribution lens 7, an LED 1, a radiation housing 202, a bayonet cap 203, and a globe 301. In the fourth embodiment, the wide light distribution lens 7 of the first embodiment is used as the wide light distribution lens 7. However, the wide light distribution lens 7 described in the second or third embodiment may be used.

The globe 301 is made of a transparent material, is hollow, and has an external shape of a chandelier type or a shape with a slightly-pointed top end. One end of the globe 301 is an opening portion, and the radiation housing 202 is connected to the opening portion via a base 8. The chandelier-type shape of this globe 301 is such a shape that the perimeter of the globe 301 in a cross-section perpendicular to the central axis gradually increases in the direction from the opening portion toward the top along the central axis of the globe 301, and, once reaching the maximum value d, the perimeter of the globe 301 gradually decreases. The maximum width d is smaller than the length h in the axial direction. The globe 301 releases light emitted from the LED 1 and the wide light distribution lens 7 housed in the globe 301, to the outside through the surface. The LED 1 is provided on the base 8, and has a light-emitting surface. This light-emitting surface is positioned to face the bottom surface 92 of the wide light distribution lens 7.

The opposite end portion of the radiation housing 202 from the end portion connected to the opening portion of the globe 301 is connected to the bayonet cap 203. This radiation housing 202 is thermally connected to the LED 1. The radiation housing 202 also houses a power supply circuit 204 that converts alternating-current voltage to direct-current voltage. The power supply circuit 204 is electrically connected to the LED 1 by wires 205, and is electrically connected to the bayonet cap 203 by wires 206. The bayonet cap 203 can be connected to a socket for light bulbs.

Next, the functions of the lighting device 201 of the fourth embodiment are described. An example situation where the bayonet cap 203 of the lighting device 201 is attached to a socket provided at the ceiling of a room or a lighting fixture is now described. When power is supplied to the socket by a power supply or the like in the room, a constant current is supplied to the LED 1 via the bayonet cap 203 and the power supply circuit 204. With this, the LED 1 emits light. Light beams emitted from the light-emitting surface of the LED 1 enter the bottom surface 92 of the wide light distribution lens 7. The light beams that have entered the bottom surface 92 are spread into a wide light distribution by the wide light distribution lens 7. With this, LED lighting having a light distribution as wide as that of an incandescent light bulb is realized. Furthermore, the globe 301 is transparent, and the wide light distribution lens 7 is also transparent. Accordingly, when the lighting device is off, the aesthetic aspect inherent to transparency is exhibited. When the lighting device is on, the wide light distribution lens 7 looks as if a light source existed therein. Because of this, the lighting device looks as if it were a lamp having a filament as its light source. Accordingly, the lighting device can be used as a retrofit light bulb.

Particularly, since the globe 301 has a chandelier-type shape, the maximum diameter d is normally 40 mm or smaller. Therefore, the wide light distribution lens 7 should be so small as to be housed in the globe 301. In view of this, in the fourth embodiment, the wide light distribution lens 7 of the first embodiment is used as the wide light distribution lens 7. As the maximum diameter of the wide light distribution lens 7 of the first embodiment can be 40 mm or smaller, the wide light distribution lens 7 of the first embodiment can be easily housed in the globe 301. With this, the wide light distribution lens 7 and the LED 1 can be protected from dust by the globe 301.

As the wide light distribution lens of the first embodiment is used, the lighting device of the fourth embodiment can be made smaller in size while maintaining a sufficient light distribution angle. In cases where the wide light distribution lens of the second or third embodiment is used, the lighting device can also be made smaller in size while maintaining a sufficient light distribution angle.

(First Modification)

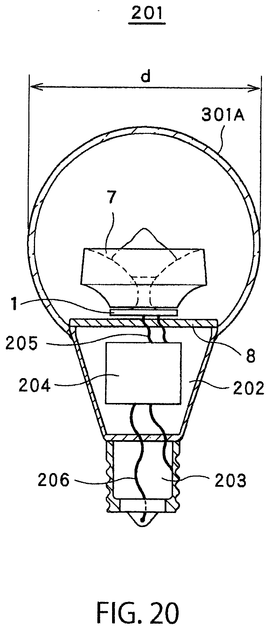

Fig. 20 shows a lighting device according to a first modification of the fourth embodiment. The lighting device 201 of the first modification is the same as the lighting device of the fourth embodiment shown in Fig. 19, except that the globe 301 is replaced with a globe 301A. The globe 301A has the shape of a conventional light bulb. The external shape of this globe 301A having the shape of a light bulb is such a semispherical shape that the perimeter of the globe 301A in a cross-section perpendicular to the central axis of the globe gradually increases in the direction from the opening portion toward the top along the central axis, and, once reaching the maximum value d, the perimeter of the globe 301A decreases. In the first modification, the base 8 on which the LED 1 is provided is housed in the globe 301A. The lighting device of the first modification can obtain a wide-distribution light source of a small size.

As the wide light distribution lens of the first embodiment is used, the lighting device of the first modification can be made smaller in size while maintaining a sufficient light distribution angle. In cases where the wide light distribution lens of the second or third embodiment is used, the lighting device can also be made smaller in size while maintaining a sufficient light distribution angle.

(Second Modification)

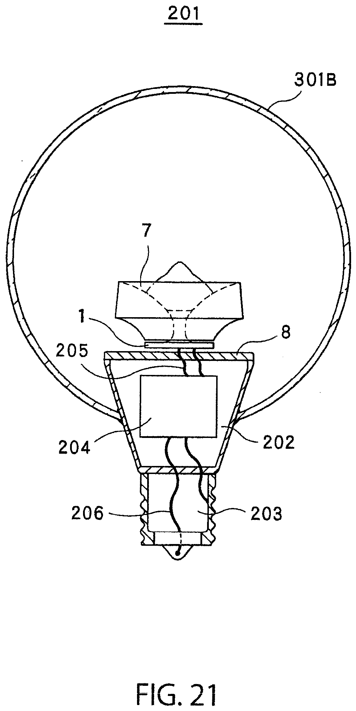

Fig. 21 shows a lighting device according to a second modification of the fourth embodiment. The lighting device 201 of the second modification is the same as the lighting device of the fourth embodiment shown in Fig. 19, except that the globe 301 is replaced with a globe 301B. The globe 301B has the shape of a ball-like light bulb. The globe 301B of the ball-like light bulb type is hollow inside, and has a circular shape having a portion cut off along a plane. In the lighting device 201 of the second modification, not only the base 8 on which the LED 1 is provided, but also part of the radiation housing 202 is housed in the globe 301B. The lighting device of the second modification can also have a wide-distribution light source of a small size.

As the wide light distribution lens of the first embodiment is used, the lighting device of the second modification can be made smaller in size while maintaining a sufficient light distribution angle. In cases where the wide light distribution lens of the second or third embodiment is used, the lighting device can also be made smaller in size while maintaining a sufficient light distribution angle.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made, falling under the scope of the inventions as defined in the accompanying claims.

**Claims**

1.  A wide light distribution lens (7) comprising:

    a first optical element (80) having a shape rotationally symmetric about a central axis (5), the first optical element (80) being transparent to visible light, the first optical element (80) including a first portion (81a) and a second portion (81b) connected to the first portion, the first portion (81a) and the second portion (81b) having a shape rotationally symmetric about the central axis (5), the first portion (81a) including a bottom surface (85) having a shape of one of a concave surface or a flat surface, and a side surface (84) connected to the bottom surface, the second portion (81b) including an upper surface (86) and a side surface (83) connected to the upper surface (86), the side surface (84) of the first portion (81a) and the side surface (83) of the second portion (81b) having joining portions forming an edge along which the side surface (84) of the first portion (81a) and the side surface (83) of the second portion (81b) are joined, wherein an edge of the bottom surface (85) is closer to the central axis than the edge along which the side surface (84) of the first portion (81a) and the side surface (83) of the second portion (81b) are joined, such that the joining portions have a shape wider than the bottom surface, further comprising a second optical element (90) having a shape rotationally symmetric about the central axis (5), the second optical element (90) being connected to the first portion (81a) of the first optical element (80), wherein the second optical element (90) includes a third portion (91a) and a fourth portion (91b) connected to the third portion, the third portion (91a) includes a flat bottom surface (92) and a side surface connected to the bottom surface (92), the fourth portion (91b) includes an upper surface (93) and a side surface connected to the upper surface (93), the side surface of the third portion (91a) and the side surface of the fourth portion (91b) are connected at joining surfaces defined as cross-sectional surfaces of the second optical element (90) taken along a plane perpendicular to the central axis having the same size and the same shape, the joining surfaces are larger than the bottom surface (92), and the upper surface (93) of the fourth region has a shape concave to the central axis (5), the shape of the upper surface (93) conforming to the side surface (84) of the first portion (81a) of the first optical element (80),

wherein a member (1) including a first region having a center in which the central axis (5) passes through and a second region located outside the first region, the first region and the second region being concentric regions, is disposed to face the bottom surface (85) of the first portion (81a), in a cross-section of the first optical element (80) taken along a plane including the central axis (5), the side surface (84) of the first portion (81a) is designed to conform to the upper surface (93) of the second optical element (90) so that an angle $\theta_P$ between an outward normal vector of the first portion (81a) at a first point (P) on the side surface (84) and a first vector (PA) from the first point (P) toward a second point (A) is larger than a total reflection angle $\theta_C$ in the third portion (91a) of the second optical element (90) in the cross section, the second point (A) being a point in the first region among points existing on the member (1), and in the cross-section, the side surface (83) of the second portion (81b) is designed so that an angle $\theta_Q$ between an inward normal vector of the second portion (81b) at a third point (Q) on the side surface (83) and a vector from the third point (Q) toward a fourth point (B) is larger than the total reflection angle $\theta_C$ in the second portion (81b), the fourth point (B) being a point in the second region among the points existing on the member (1),

wherein the member (1) is a surface light source having a light-emitting surface (2), and the first region has an area equal to half an area of the light-emitting surface (2) of the surface light source,

wherein a light beam (31) emitted from the light-emitting surface (2) in the direction along the center axis (5) and incident on the bottom surface (85) of the first optical element (80) is refracted and transmitted by the side surface (83) of the first optical element (80) to the front side of the wide light distribution lens (7),

wherein a light beam (32) emitted from the first region and incident on the bottom surface (92) of the second optical element (90) is totally reflected by the upper surface (93) of the second optical element (90) and is emitted to rear side of the wide light distribution lens (7),

wherein a light beam (33) emitted from the second region of the light emitting surface (2) and incident on the bottom surface (92) of the second optical element (90) passes through the upper surface (93) of the second optical element (90), propagates through the first optical element (80) and is once totally reflected by the side surface (83) of the first optical element (80) and further refracted and transmitted by the same side surface (83) to be emitted from the wide light distribution lens (7).

2. The wide light distribution lens according to claim 1, further comprising:

a connecting member (82) connecting the first optical element (80) and the second optical element (90) is provided on one of the bottom surface (85) or the side surface (84) of the first portion (81a) of the first optical element (80),

a concave portion having the connecting member (82) inserted thereinto is formed in the upper surface (93) of the fourth portion (91b) of the second optical element (90), and

a distance between the side surface (84) of the first portion (81a) of the first optical element (80) and the upper surface (93) of the fourth portion (91b) of the second optical element (90) is equal to or longer than a wavelength of light emitted from the surface light source (1).

3. The wide light distribution lens according to claim 1, wherein
a hole (11) rotationally symmetric about the central axis (5) is formed in the first optical element (80), and
an area of a cross-section of the hole (11) taken along a plane perpendicular to the central axis (5) becomes smaller in a direction from the second portion (81b) toward the first portion (81a).

4. The wide light distribution lens according to claim 1, wherein a through hole (11) extending along the central axis (5) is formed in the second optical element (90).

5. The wide light distribution lens according to claim 1, wherein, in the cross-section, a distance from the central axis (5) to a point on the side surface (83) of the second portion (81b) monotonically decreases in a direction from a point of connection to the first portion (81a) toward the upper surface (86) of the second portion (81b).

6. The wide light distribution lens according to claim 5, wherein, in the cross-section, the upper surface (86) of the second portion (81b) has an apex of a convex shape, the apex being located on the central axis (5).

7. The wide light distribution lens according to claim 3, wherein
in the cross-section, where a fifth point exists on an inner surface of the hole, and a sixth point is a point located on the fifth point side of the central axis (5) and is located in the second region among the points existing on the member (1), an angle $\theta_V$ between an inward normal vector of the inner surface at the fifth point and a vector from the fifth point toward the sixth point is larger than the total reflection angle in the second portion (81b).

8. The wide light distribution lens according to claim 1, wherein a distance from the central axis (5) to one of end portions of the side surface (83) of the second portion (81b), whichever is closer to the member (1), is shorter than the maximum value of a distance from the central axis (5) to the upper surface (93) of the fourth portion (91b) of the second optical element (90).

9. The wide light distribution lens according to claim 1, wherein a distance from the central axis (5) to one of end portions of the side surface of the second portion, whichever is closer to the member, is equal to a distance from the central axis (5) to one of end portions of the upper surface (93) of the fourth portion (91b) of the second optical element (90), whichever is farther from the light-emitting surface (2).

10. The wide light distribution lens according to claim 1, wherein, on a surface of the second optical element (90), a normal vector at a point where a distance from the central axis (5) is the shortest is perpendicular to the central axis (5).

11. The wide light distribution lens according to claim 1, wherein
in a cross-section of the second optical element (90) including the central axis (5), a direction in which light is emitted from the light-emitting surface (2) along the central axis (5) is a z-direction, and a direction perpendicular to the z-direction is an x-direction,
the upper surface is defined by the following expression:

$$x = r_B - (r_B - l)\exp(\tan\theta_a\Theta)\cos\Theta$$

$$z = (r_B - l)\exp(\tan\theta_a\Theta)\sin\Theta$$

the parameter $\Theta$ in the expression is a value within the range defined as follows,

$$0 \le \Theta \le \pi$$

the real constant $\theta_a$ satisfies the following condition,

$$\theta_C \le \theta_a < \frac{\pi}{2}$$

and
$r_B$ satisfies the following condition,

$$l < r_B,$$

where $r_B$ represents a distance from a point in the first region to the central axis (5), and l represents a radius of the through hole (11) on the x-axis.

12. The wide light distribution lens according to claim 3, wherein, in the cross-section, a normal vector at a point on the inner surface of the hole (11) is perpendicular to the central axis (5).

13. A lighting device comprising:

the wide light distribution lens of claim 1;
a light-emitting element having a light-emitting surface, the light-emitting element being the member (1) of the wide light distribution lens; and
a globe (301, 301A, 301B) configured to house the wide light distribution lens and the surface light source.

**Patentansprüche**

1. Linse mit breiter Lichtverteilung (7), umfassend:

ein erstes optisches Element (80), aufweisend eine rund um eine Mittelachse (5) rotationssymmetrische Form, wobei das erste optische Element (80) für sichtbares Licht transparent ist, wobei das erste optische Element (80) einen ersten Abschnitt (81a) und einen zweiten Abschnitt (81b), welcher mit dem ersten Abschnitt verbunden ist, aufweist, wobei der erste Abschnitt (81a) und der zweite Abschnitt (81b) eine rund um die Mittelachse (5) rotationssymmetrische Form aufweisen, wobei der erste Abschnitt (81a) eine Bodenfläche (85), aufweisend eine Form von einer von einer konkaven Oberfläche oder einer flachen Oberfläche und einer Seitenfläche (84), welche mit der Bodenfläche verbunden ist, beinhaltet, wobei der zweite Abschnitt (81b) eine Deckfläche (86) und eine Seitenfläche (83), welche mit der Deckfläche (86) verbunden ist, beinhaltet, wobei die Seitenfläche (84) des ersten Abschnitts (81a) und die Seitenfläche (83) des zweiten Abschnitts (81b) Verbindungsabschnitte aufweisen, welche einen Rand bilden, entlang dessen die Seitenfläche (84) des ersten Abschnitts (81a) und die Seitenfläche (83) des zweiten Abschnitts (81b) verbunden sind, wobei ein Rand der Bodenfläche (85) näher an der Mittelachse ist als der Rand, entlang dessen die Seitenfläche (84) des ersten Abschnitts (81a) und die Seitenfläche (83) des zweiten Abschnitts (81b) verbunden sind, sodass die Verbindungsabschnitte eine breitere Form als die Bodenfläche aufweisen, weiter umfassend ein zweites optisches Element (90), aufweisend eine rund um eine Mittelachse (5) rotationssymmetrische Form, wobei das zweite optische Element (90) mit dem ersten Abschnitt (81a) des ersten optischen Elements (80) verbunden ist, wobei das zweite optische Element (90) einen dritten Abschnitt (91a) und einen vierten Abschnitt (91b), welcher mit dem dritten Abschnitt verbunden ist, beinhaltet, der dritte Abschnitt (91a) eine flache Bodenfläche (92) und eine Seitenfläche, welche mit der Bodenfläche (92) verbunden ist, beinhaltet, wobei der vierte Abschnitt (91b) eine Deckfläche (93) und eine Seitenfläche, welche mit der Deckfläche (93) verbunden ist, beinhaltet, die Seitenfläche des dritten Abschnitts (91a) und die Seitenfläche des vierten Abschnitts (91b) an Verbindungsflächen verbunden sind, welche als Querschnittsflächen des zweiten optischen Elements (90) definiert sind, welche entlang einer Ebene senkrecht zu der Mittelachse mit derselben Größe und derselben Form genommen sind, die Verbindungsflächen größer sind als die Bodenfläche (92), und die Deckfläche (93) der vierten Region eine Form konkav zu der Mittelachse (5) aufweist, wobei die Form der Deckfläche (93) mit der Seitenfläche (84) des ersten Abschnitts (81a) des ersten optischen Elements (80) übereinstimmt, wobei ein Teil (1), welcher eine erste Region mit einem Mittelpunkt, durch welchen die Mittelachse (5) verläuft, und eine zweite Region, welche sich außerhalb der ersten Region befindet, beinhaltet, wobei die erste und die zweite Region konzentrische Regionen sind, angeordnet ist, um der Bodenfläche (85) des ersten Abschnitts (81a) in einem Querschnitt des ersten optischen Elements (80), welcher entlang einer Ebene, welche die Mittelachse (5) beinhaltet, genommen wird, gegenüberzuliegen, die Seitenfläche (84) des ersten Abschnitts (81a) ausgelegt ist, um mit der Deckfläche (93) des zweiten optischen Elements (90) übereinzustimmen, sodass ein Winkel $\theta_P$ zwischen einem Auswärts-Normalenvektor des ersten Abschnitts (81a) an einem ersten Punkt (P) auf der Seitenfläche (84) und einem ersten Vektor (PA) von dem ersten Punkt (P) zu einem zweiten Punkt (A) hin größer ist als ein Totalreflexionswinkel $\theta_C$ in dem dritten Abschnitt (91a) des zweiten optischen Elements (90) in dem Querschnitt, wobei der zweite Punkt (A) ein Punkt in der ersten Region unter Punkten ist, welche auf dem Teil (1) existieren, und in dem Querschnitt die Seitenfläche (83) des zweiten Abschnitts (81b) ausgelegt ist, sodass ein Winkel $\theta_Q$ zwischen einem Einwärts-Normalenvektor des zweiten Abschnitts (81b) an einem dritten Punkt (Q) auf der Seitenfläche (83) und einem Vektor von dem dritten Punkt (Q) zu einem vierten Punkt (B) hin größer ist als der Totalreflexionswinkel $\theta_C$ in dem zweiten Abschnitt (81b), wobei der vierte Punkt (B) ein Punkt in der zweiten Region unter den Punkten ist, welche auf dem Teil (1) existieren, wobei der Teil (1) eine Oberflächenlichtquelle mit einer lichtemittierenden Oberfläche (2) ist, und die erste Region eine Fläche aufweist, welche gleich einer halben Fläche der lichtemittierenden Oberfläche (2) der Oberflächenlichtquelle ist, wobei ein Lichtstrahl (31), welcher von der lichtemittierenden Oberfläche (2) in die Richtung entlang der Mittelachse (5) emittiert wird und auf die Bodenfläche (85) des ersten optischen Elements (80) einfällt, gebrochen und durch die Seitenfläche (83) des ersten optischen Elements (80) zu der Vorderseite der Linse mit breiter Lichtverteilung (7) übertragen wird, wobei ein Lichtstrahl (32), welcher von der ersten Region emittiert wird und auf die Bodenfläche (92) des zweiten optischen Elements (90) einfällt, durch die Deckfläche (93) des zweiten optischen Elements (90) totalreflektiert wird und an die Rückseite der Linse mit breiter Lichtverteilung (7) emittiert wird, wobei ein Lichtstrahl (33), welcher von der zweiten Region der lichtemittierenden Oberfläche (2) emittiert wird und auf die Bodenfläche (92) des zweiten optischen Elements (90) einfällt, durch die Deckfläche (93) des zweiten optischen Elements (90) gelangt, sich durch das erste optische Element (80) ausbreitet und durch die Seitenfläche (83) des ersten optischen Elements (80) einmal totalreflektiert wird und weiter durch dieselbe Seitenfläche (83) gebrochen und übertragen wird, um aus der Linse mit breiter Lichtverteilung (7) emittiert zu werden.

2. Linse mit breiter Lichtverteilung nach Anspruch 1, weiter umfassend:

   einen Verbindungsteil (82), welcher das erste optische Erste (80) und das zweite optische Element (90) verbindet, auf einer von der Bodenfläche (85) oder der Seitenfläche (84) des ersten Abschnitts (81a) des ersten optischen Elements (80) bereitgestellt ist,
   ein konkaver Abschnitt mit darin eingeführtem Verbindungsteil (82) in der Deckfläche (93) des vierten Abschnitts (91b) des zweiten optischen Elements (90) gebildet ist, und
   ein Abstand zwischen der Seitenfläche (84) des ersten Abschnitts (81a) des ersten optischen Elements (80) und der Deckfläche (93) des vierten Abschnitts (91b) des zweiten optischen Elements (90) gleich oder länger als eine Wellenlänge von Licht ist, welches von der Oberflächenlichtquelle (1) emittiert wird.

3. Linse mit breiter Lichtverteilung nach Anspruch 1, wobei
   ein Loch (11) in dem ersten optischen Element (80) rotationssymmetrisch um die Mittelachse (5) gebildet wird, und
   eine Fläche eines Querschnitts des Lochs (11), welcher entlang einer Ebene senkrecht zu der Mittelachse (5) genommen wird, in einer Richtung von dem zweiten Abschnitt (81b) zu dem ersten Abschnitt (81a) hin kleiner wird.

4. Linse mit breiter Lichtverteilung nach Anspruch 1, wobei ein Durchgangsloch (11), welches sich entlang der Mittelachse (5) erstreckt, in dem zweiten optischen Element (90) gebildet wird.

5. Linse mit breiter Lichtverteilung nach Anspruch 1, wobei in dem Querschnitt ein Abstand von der Mittelachse (5) zu einem Punkt auf der Seitenfläche (83) des zweiten Abschnitts (81b) in einer Richtung von einem Verbindungspunkt mit dem ersten Abschnitt (81a) zu der Deckfläche (86) des zweiten Abschnitts (81b) hin monoton abnimmt.

6. Linse mit breiter Lichtverteilung nach Anspruch 5, wobei in dem Querschnitt die Deckfläche (86) des zweiten Abschnitts (81b) einen Scheitelpunkt einer konvexen Form aufweist, wobei der Scheitelpunkt sich auf der Mittelachse (5) befindet.

7. Linse mit breiter Lichtverteilung nach Anspruch 3, wobei
   in dem Querschnitt, wo ein fünfter Punkt auf einer Innenfläche des Lochs existiert und ein sechster Punkt ein Punkt ist, welcher sich auf der Seite des fünften Punktes der Mittelachse (5) befindet und sich in der zweiten Region unter den Punkten befindet, welche auf dem Teil (1) existieren, ein Winkel $\theta_V$ zwischen einem Einwärts-Normalenvektor der Innenfläche an dem fünften Punkt und einem Vektor von dem fünften Punkt zu dem sechsten Punkt hin größer ist als der Totalreflexionswinkel in dem zweiten Abschnitt (81b).

8. Linse mit breiter Lichtverteilung nach Anspruch 1, wobei ein Abstand von der Mittelachse (5) zu einem von Endabschnitten der Seitenfläche (83) des zweiten Abschnitts (81b), welcher auch immer näher zu dem Teil (1) ist, kürzer als der Maximalwert eines Abstands von der Mittelachse (5) zu der Deckfläche (93) des vierten Abschnitts (91b) des zweiten optischen Elements (90) ist.

9. Linse mit breiter Lichtverteilung nach Anspruch 1, wobei ein Abstand von der Mittelachse (5) zu einem von Endabschnitten der Seitenfläche des zweiten Abschnitts, welcher auch immer näher zu dem Teil ist, gleich einem Abstand von der Mittelachse (5) zu einem von Endabschnitten der Deckfläche (93) des vierten Abschnitts (91b) des zweiten optischen Elements (90) ist, welcher auch immer weiter weg von der lichtemittierenden Oberfläche (2) ist.

10. Linse mit breiter Lichtverteilung nach Anspruch 1, wobei auf einer Oberfläche des zweiten optischen Elements (90) ein Normalenvektor an einem Punkt, wo ein Abstand von der Mittelachse (5) der kürzeste ist, senkrecht zu der Mittelachse (5) ist.

11. Linse mit breiter Lichtverteilung nach Anspruch 1, wobei
    in einem Querschnitt des zweiten optischen Elements (90), welcher die Mittelachse (5) beinhaltet, eine Richtung, in welcher Licht von der lichtemittierenden Oberfläche (2) entlang der Mittelachse (5) emittiert wird, eine z-Richtung ist, und eine Richtung senkrecht zu der z-Richtung eine x-Richtung ist,
    die Deckfläche durch die folgende Gleichung definiert ist:

$$x = r_B - (r_B - l)exp(\tan\theta_a\,\theta)\cos\theta$$

$$z = (r_B - L)exp(\tan\theta_a\,\theta)\sin\theta$$

worin der Parameter $\Theta$ in der Gleichung ein Wert innerhalb des Bereichs ist, welcher wie folgt definiert ist:

$$0 \leq \theta \leq \pi$$

worin die reelle Konstante $\theta_a$ die folgende Bedingung erfüllt:

$$\theta_c \leq \theta_a < \frac{\pi}{2}$$

und
$r_B$ die folgenden Bedingung erfüllt:

$$l < r_B,$$

worin $r_B$ einen Abstand von einem Punkt in der ersten Region zu der Mittelachse (5) repräsentiert, und l einen Radius des Durchgangslochs (11) auf der x-Achse repräsentiert.

12. Linse mit breiter Lichtverteilung nach Anspruch 3, wobei in dem Querschnitt ein Normalenvektor an einem Punkt auf der Innenfläche des Lochs (11) senkrecht zu der Mittelachse (5) ist.

13. Beleuchtungsvorrichtung, umfassend
die Linse mit breiter Lichtverteilung nach Anspruch 1;
ein lichtemittierendes Element, aufweisend eine lichtemittierende Oberfläche, wobei das lichtemittierende Element der Teil (1) der Linse mit breiter Lichtverteilung ist; und
eine Kugel (301, 301A, 301B), welche konfiguriert ist, um die Linse mit breiter Lichtverteilung und die Oberflächenlichtquelle aufzunehmen.

**Revendications**

1. Lentille de distribution de lumière large (7) comprenant :

un premier élément optique (80) présentant une forme symétrique en rotation autour d'un axe central (5), le premier élément optique (80) étant transparent à la lumière visible, le premier élément optique (80) incluant une première partie (81a) et une deuxième partie (81b) reliée à la première partie, la première partie (81a) et la deuxième partie (81b) présentant une forme symétrique en rotation autour de l'axe central (5), la première partie (81a) incluant une surface inférieure (85) présentant une forme de l'une d'une surface concave ou d'une surface plane, et une surface latérale (84) reliée à la surface inférieure, la deuxième partie (81b) incluant une surface supérieure (86) et une surface latérale (83) reliée à la surface supérieure (86), la surface latérale (84) de la première partie (81a) et la surface latérale (83) de la deuxième partie (81b) présentant des parties de jonction formant un bord le long duquel la surface latérale (84) de la première partie (81a) et la surface latérale (83) de la deuxième partie (81b) sont jointes, dans laquelle un bord de la surface inférieure (85) est plus proche de l'axe central que le bord le long duquel la surface latérale (84) de la première partie (81a) et la surface latérale (83) de la deuxième partie (81b) sont jointes, de sorte que les parties de jonction présentent une forme plus large que la surface inférieure,
comprenant en outre un second élément optique (90) présentant une forme symétrique en rotation autour de l'axe central (5), le second élément optique (90) étant relié à la première partie (81a) du premier élément optique (80), dans laquelle le second élément optique (90) inclut une troisième partie (91a) et une quatrième partie (91b) reliée à la troisième partie, la troisième partie (91a) inclut une surface inférieure plate (92) et une surface latérale reliée à la surface inférieure (92), la quatrième partie (91b) inclut une surface supérieure (93) et une surface latérale reliée à la surface supérieure (93), la surface latérale de la troisième partie (91a) et la surface latérale de la quatrième partie (91b) sont reliées au niveau de surfaces de jonction définies comme des surfaces de section transversale du second élément optique (90) prises le long d'un plan perpendiculaire à l'axe central présentant la même taille et la même forme, les surfaces de jonction sont plus grandes que la surface inférieure (92), et la surface supérieure (93) de la quatrième partie présente une forme concave par rapport à l'axe central (5), la forme de la surface supérieure (93) se conformant à la surface latérale (84) de la première partie (81a) du premier élément optique (80),

dans laquelle un membre (1) incluant une première région présentant un centre dans lequel passe l'axe central (5) et une seconde région située à l'extérieur de la première région, la première région et la seconde région étant des régions concentriques, est disposé pour faire face à la surface inférieure (85) de la première partie (81a), dans une section transversale du premier élément optique (80) prise le long d'un plan incluant l'axe central (5), la surface latérale (84) de la première partie (81a) est conçue pour se conformer à la surface supérieure (93) du second élément optique (90) de sorte qu'un angle $\theta_P$ entre un vecteur normal vers l'extérieur de la première partie (81a) au niveau d'un premier point (P) sur la surface latérale (84) et un premier vecteur (PA) du premier point (P) vers un deuxième point (A) est plus grand qu'un angle de réflexion total $\theta_C$ dans la troisième partie (91a) du second élément optique (90) dans la section transversale, le deuxième point (A) étant un point dans la première région parmi des points existant sur le membre (1), et dans la section transversale, la surface latérale (83) de la deuxième partie (81b) est conçue de sorte qu'un angle $\theta_Q$ entre un vecteur normal vers l'intérieur de la deuxième partie (81b) au niveau d'un troisième point (Q) sur la surface latérale (83) et un vecteur du troisième point (Q) vers un quatrième point (B) est plus grand que l'angle de réflexion total $\theta_C$ dans la deuxième partie (81b), le quatrième point (B) étant un point dans la deuxième région parmi les points existant sur le membre (1),

dans laquelle le membre (1) est une source de lumière de surface présentant une surface électroluminescente (2), et la première région présente une aire égale à la moitié d'une aire de la surface électroluminescente (2) de la source de lumière de surface,

dans laquelle un faisceau de lumière (31) émis depuis la surface électroluminescente (2) dans la direction le long de l'axe central (5) et incident sur la surface inférieure (85) est réfracté et transmis par la surface latérale (83) du premier élément optique (80) au côté avant de la lentille de distribution de lumière large (7),

dans laquelle un faisceau de lumière (32) émis depuis la première région et incident sur la surface inférieure (92) du second élément optique (90) est totalement réfléchi par la surface supérieure (93) du second élément optique (90) et est émis vers un côté arrière de la lentille de répartition de la lumière large (7),

dans lequel un faisceau de lumière (33) émis depuis la seconde région de la surface électroluminescente (2) et incident sur la surface inférieure (92) du second élément optique (90) passe à travers la surface supérieure (93) du second élément optique (90), se propage à travers le premier élément optique (80) et est dès lors totalement réfléchi par la surface latérale (83) du premier élément optique (80) et en outre réfracté et transmis par la même surface latérale (83) pour être émis par la lentille de distribution de lumière large (7).

2. Lentille de distribution de lumière large selon la revendication 1, comprenant en outre :

un élément de liaison (82) reliant le premier élément optique (80) et le second élément optique (90) est prévu sur l'une de la surface inférieure (85) ou de la surface latérale (84) de la première partie (81a) du premier élément optique (80),

une partie concave présentant l'élément de liaison (82) inséré en son sein est formée dans la surface supérieure (93) de la quatrième partie (91b) du second élément optique (90), et

une distance entre la surface latérale (84) de la première partie (81a) du premier élément optique (80) et la surface supérieure (93) de la quatrième partie (91b) du second élément optique (90) est égale ou plus longue qu'une longueur d'onde de lumière émise depuis la source de lumière de surface (1).

3. Lentille de distribution de lumière large selon la revendication 1, dans laquelle
un trou (11) symétrique en rotation autour de l'axe central (5) est formé dans le premier élément optique (80), et
une aire d'une section transversale du trou (11) prise le long d'un plan perpendiculaire à l'axe central (5) devient plus petite dans une direction allant de la deuxième partie (81b) vers la première partie (81a).

4. Lentille de distribution de lumière large selon la revendication 1, dans laquelle un trou traversant (11) s'étendant le long de l'axe central (5) est formé dans le second élément optique (90).

5. Lentille de distribution de lumière large selon la revendication 1, dans laquelle, dans la section transversale, une distance de l'axe central (5) à un point sur la surface latérale (83) de la deuxième partie (81b) diminue de façon monotone dans une direction allant d'un point de liaison à la première partie (81a) vers la surface supérieure (86) de la deuxième partie (81b).

6. Lentille large de distribution de lumière selon la revendication 5, dans laquelle, dans la section transversale, la surface supérieure (86) de la deuxième partie (81b) présente un sommet d'une forme convexe, le sommet étant situé sur l'axe central (5).

7. Lentille de distribution de lumière large selon la revendication 3, dans laquelle
dans la section transversale, où un cinquième point existe sur une surface intérieure du trou, et un sixième point est un point situé sur le cinquième point de l'axe central (5) et est situé dans la seconde région parmi les points existants sur le membre (1), un angle $\theta_V$ entre un vecteur normal vers l'intérieur de la surface intérieure au niveau du cinquième point et un vecteur depuis le cinquième point vers le sixième point est plus grand que l'angle de réflexion total dans la deuxième partie (81b).

8. Lentille de distribution de lumière large selon la revendication 1, dans laquelle une distance de l'axe central (5) à l'une de parties d'extrémité de la surface latérale (83) de la deuxième partie (81b), qui est plus proche du membre (1), est plus courte que la valeur maximale d'une distance de l'axe central (5) à la surface supérieure (93) de la quatrième partie (91b) du second élément optique (90).

9. Lentille de distribution de lumière large selon la revendication 1, dans laquelle une distance de l'axe central (5) à l'une de parties d'extrémité de la surface latérale de la deuxième partie, lequel est plus proche du membre, est égale à une distance de l'axe central (5) à l'une de parties d'extrémité de la surface supérieure (93) de la quatrième partie (91b) du second élément optique (90), lequel est plus loin de la surface électroluminescente (2).

10. Lentille de distribution de lumière large selon la revendication 1, dans laquelle, sur une surface du second élément optique (90), un vecteur normal au niveau d'un point où une distance depuis l'axe central (5) est la plus courte est perpendiculaire à l'axe central (5).

11. Lentille de distribution de lumière large selon la revendication 1, dans laquelle
dans une section transversale du second élément optique (90) incluant l'axe central (5), une direction dans laquelle de la lumière est émise depuis la surface électroluminescente (2) le long de l'axe central (5) est une direction z, et une direction perpendiculaire à la direction z est une direction x,
la surface supérieure est définie par l'expression suivante :

$$x = r_B - (r_B - l)\exp(\tan\theta_a \Theta)\cos\Theta$$

$$z = (r_B - l)\exp(\tan\theta_a \Theta)\sin\Theta$$

le paramètre $\Theta$ dans l'expression est une valeur au sein de la plage définie comme suit,

$$0 \le \Theta \le \pi$$

la constante réelle $\theta_a$ satisfait la condition suivante,

$$\theta_C \le \theta_a < \frac{\pi}{2}$$

et
$r_B$ satisfait la condition suivante,

$$l < r_B,$$

où $r_B$ représente une distance d'un point de la première région à l'axe central (5), et I représente un rayon du trou traversant (11) sur l'axe x.

12. Lentille de distribution de lumière large selon la revendication 3, dans laquelle, dans la section transversale, un vecteur normal au niveau d'un point sur la surface intérieure du trou (11) est perpendiculaire à l'axe central (5).

13. Dispositif d'éclairage comprenant :

la lentille de distribution de lumière large selon la revendication 1 ;
un élément électroluminescent présentant une surface électroluminescente, l'élément électroluminescent étant le membre (1) de la lentille de distribution de lumière large ; et
un globe (301, 301A, 301B) configuré pour loger la lentille de distribution de lumière large et la source de lumière de surface.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

<u>201</u>

FIG. 20

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4660654 B
- US 2012320580 A1
- US 2011157898 A1
- EP 2367045 A1
- US 2012026748 A1
- JP 2003090920 A
- US 2009310368 A1